# EUROPÄISCHE PATENTSCHRIFT

(11) **EP 0 623 647 B1**
(45) Veröffentlichungstag und Bekanntmachung des Hinweises auf die Patenterteilung: **12.11.1997**
(21) Anmeldenummer: 94106625.0
(22) Anmeldetag: 28.04.1994
(51) Int. Cl.: C08K 3/26, C08L 67/00

(54) **Flammgeschützte thermoplastische Copolyesterformmassen**
Flame-retardant thermoplastic copolyester moulding compositions
Masses de moulage thermoplastiques ignifugées à base de copolyesters

(30) Priorität: 07.05.1993 DE 4315208
(43) Veröffentlichungstag der Anmeldung: 09.11.1994
(73) Patentinhaber: BASF Aktiengesellschaft, 67063 Ludwigshafen (DE)
(72) Erfinder: Gareiss, Brigitte, Dr., D-67071 Ludwigshafen (DE); Plachetta, Christoph, Dr., D-67117 Limburgerhof (DE); Ulmerich, Karlheinz, D-67316 Carlsberg (DE); Pipper, Gunter, D-67098 Bad Duerkheim (DE)

(56) Entgegenhaltungen:
- EP-A- 0 543 262
- DE-A- 2 924 895
- Saechtling, Kunststoff Taschenbuch, 25. Ausgabe Carl Hanser Verlag München, S. 346.

## Beschreibung

Die Erfindung betrifft thermoplastische Formmassen, enthaltend als wesentliche Komponenten
A) 10 - 80 Gew.-% eines Copolyesters auf der Basis von Polyalkylenterephthalaten, welcher als Cokomponente 5 bis 25 Gew.-%, bezogen auf A) eine Dimersäure mit 7 bis 52 C-Atomen enthält
B) 20 - 70 Gew.-% einer Mischung aus
   b₁) einem Magnesium-Calcium-Carbonat der allgemeinen Formel MgₓCa_{y}(CO₃)_{x+y} · m H₂O,
      wobei x und y Zahlen von 1 bis 5 bedeuten
      und x/y ≥ 1 gilt
      und m ≥ 0
   und
b₂) einem basischen Magnesium-Carbonat der allgemeinen Formel Mgₙ(CO₃)ᵥ(OH)₂ₙ₋₂ᵥ · w H₂O, wobei
   n eine Zahl von 1 bis 6 bedeutet,
   v eine Zahl größer als 0 und kleiner als 6
   und n/v > 1 gilt
   und w ≥ 0,
wobei das Mengenverhältnis von b₁):b₂) im Bereich von 1:1 bis 3:1 liegt.

Außerdem betrifft die Erfindung die Verwendung dieser thermoplastischen Formkörpern sowie die hierbei erhältlichen Formkörper aus den thermoplastischen Formmassen.

Thermoplastische Polyester werden in vielen unterschiedlichen Bereichen verwendet, z.B. im Automobilbereich, zur Herstellung von Gehäusen für Elektrogeräte oder im Bausektor.

Für viele Anwendungen ist es notwendig, daß die Polyesterformmassen flammfest ausgerüstet sind. Übliche Flammschutzmittel wie Al(OH)₃ oder Mg(OH)₂ sind für Polyester nicht geeignet, da diese entweder zu einem Molekulargewichtsabbau des Polymeren führen oder bei den entsprechenden Verarbeitungstemperaturen thermisch instabil sind.

Entsprechend wird in der jüngeren EP-A-0 543 262 vorgeschlagen, Mischungen aus Metallcarbonaten von Metallen der 2. Hauptgruppe als Flammschutzmittel für Polyester einzusetzen.

Aus der DE-A 3 446 244, DE-A 27 07 852 und DE-A 29 24 895 ist es bekannt, die mechanischen Eigenschaften von Polyesterformmassen zu verbessern, wobei Copolyester auf Basis von aliphatischen Dicarbonsäuren gegebenenfalls in Mischung mit Polybutylenterephthalat verwendet werden.

Durch den hohen Füllstoffgehalt, welcher für einen effektiven Flammschutz notwendig ist, sind die mechanischen Eigenschaften für viele Anwendungen nicht mehr ausreichend. Insbesondere Reißdehnung und Zähigkeit werden drastisch verringert. Diese Nachteile betreffen auch Polyesterformmassen, welche mit Glasfasern als Füllstoff ausgerüstet sind. Der Ersatz von Polyethylenterephthalaten durch Copolyester des Standes der Technik verbessert zwar in geringem Maß die mechanischen Eigenschaften, jedoch ist das mechanische Niveau bei hohen Füllstoffgehalten unbefriedigend.

Aufgabe der vorliegenden Erfindung war es daher, flammfeste thermoplastische Polyesterformmassen zur Verfügung zu stellen, die gleichzeitig gute mechanische Eigenschaften, insbesondere eine gute Reißdehnung und Schlagzähigkeit aufweisen.

Demgemäß wurden die eingangs definierten thermoplastischen Formmassen gefunden.

Außerdem wurden deren Verwendung zur Herstellung von Fasern, Folien und Formkörpern sowie die hierbei erhältlichen Formkörper aus den thermoplastischen Formmassen gefunden.

Überraschenderweise zeigen die erfindungsgemäßen Formmassen mit hohen Füllstoffgehalten eine synergistische Verbesserung der mechanischen Eigenschaften bei gleichzeitig gutem Flammschutz.

Als Komponente A) enthalten die erfindungsgemäßen Formmassen 10 bis 80, bevorzugt 20 bis 70 und insbesondere 25 bis 60 Gew.-% eines Copolyesters auf der Basis von Polyakylenterephthalaten, welcher als Cokomponente 5 bis 25, bevorzugt 10 bis 15 Gew.-%, bezogen auf A) einer Dimersäure mit 7 bis 52 C-Atomen enthält.

Derartige Polyalkylenterephthalate sind an sich bekannt. Der aromatische Ring kann auch substituiert sein, z.B. durch Halogene, wie Chlor und Brom und/oder durch C₁- bis C₄-Alkylgruppen, wie z.B. Methyl-, Ethyl-, i- bzw. n-Propyl- und i- bzw. n- bzw. t-Butylgruppen.

Ein geringer Teil der Terephthalsäure kann durch andere aliphatische und aromatische Dicarbonsäuren ersetzt werden, die auch als Mischung eingesetzt werden können. Nur beispielsweise seien hier Naphthalindicarbonsäuren, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt, welche in Mengen bis zu 10, bevorzugt 5 Gew.-% bezogen auf A) eingesetzt werden können.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer C₂- bis C₆-Diolkomponente, z.B. Polyethylenterephthalat, Polyethylennaphthalat, Polypropylenterephthalat oder Polybutylenterephthalat oder deren Mischungen werden besonders bevorzugt eingesetzt für den Aufbau des Copolyesters A).

Unter den erfindungsgemäß eingesetzten Dimersäuren als Cokomponente des Polyesters sollen Dimerisationsprodukte von ungesättigten Fettsäuren bzw. deren Alkylester verstanden werden.

Als Beispiele für einfach ungesättigte Fettsäuren seien Acrylsäure (C3), Crotonsäure (C4), Palmitoleinsäure (C16), Ölsäure (C18) und Erucasäure (C22) genannt. Als zweifach ungesättigte Fettsäuren seien beispielsweise Sorbinsäure (C6) und Linolsäure (C18) genannt. Triensäuren sind z.B. Linolensäure (C18) und Eleostearinsäure (C18). Als vierfach ungesättigte Fettsäure sei beispielsweise Aracludonsäure (C20) und als fünffach ungesättigte Fettsäure Clupanodonsäure (C22) genannt.

Unter Alkylestern der ungesättigten Fettsäuren sollen solche verstanden werden, welche 1 bis 4 C-Atome im Alkylrest aufweisen, wobei die Methylester bevorzugt sind.

Die Herstellung und Struktur der Dimersäuren bzw. deren Ester ist aus Journal of American Oil Chemists Society, 39 S. 534-545 (1962) bekannt.

Nach der Dimerisierung können die Dimersäuren bzw. deren Alkylester noch Doppelbindungen enthalten, welche nach üblichen Methoden hydriert werden können. Allgemein können ungesättigte oder gesättigte Dimersäuren oder Alkylester als Cokomponente des Polyesters eingesetzt werden, wobei die gesättigten Dimersäuren bzw. deren Ester bevorzugt sind. Für die Herstellung der Dimerisierungsprodukte können gleiche oder Mischungen zweier Fettsäuren bzw. deren Ester eingesetzt werden, wobei Dimersäuren aus Fettsäuren oder deren Estern mit gleicher Kohlenstoffatomanzahl bevorzugt sind.

Bevorzugte Dimersäuren sind solche mit 20 bis 44 C-Atome und insbesondere mit 36 bis 44 C-Atomen. Ganz besonders bevorzugt sind C-36-Dimersäuren der ungesättigten Fettsäuren mit 18 Kohlenstoffatomen sowie die Dimethylester der C-36-Dimersäuren. Derartige Produkte sind im Handel erhältlich, z.B. Priplast® der Firma Emery Industries Inc..

Die Herstellung der Copolyester kann durch Reaktion der Dicarbonsäuren oder deren esterbildende Derivate mit Dihydroxyverbindungen in an sich bekannter Weise erfolgen, so daß sich weitere Einzelheiten hierzu erübrigen.

Als Komponente B) enthalten die erfindungsgemäßen thermoplastischen Formmassen 20 bis 70 Gew.-%, bevorzugt 30 bis 60 Gew.-%, insbesondere 40 bis 55 Gew.-% einer Mischung aus
b₁) einem Magnesium-Calcium-Carbonat der allgemeinen Formel MgₓCa_{y}(CO₃)_{x+y} · m H₂O,
   wobei x und y Zahlen von 1 bis 5 bedeuten
   und x/y ≥ 1 gilt
   und m ≥ 0
   und
b₂) einem basischen Magnesium-Carbonat der allgemeinen Formel Mgₙ(CO₃)ᵥ(OH)₂ₙ₋₂ᵥ · w H₂O, wobei
   n eine Zahl von 1 bis 6 bedeutet,
   v eine Zahl größer als 0 und kleiner als 6
   und n/v > 1 gilt
   und w ≥ 0,
wobei das Mengenverhältnis von b₁):b₂) im Bereich von 1:1 bis 3:1 liegt.

Die Magnesium-Calcium-Carbonate b₁) können sowohl wasserhaltig als auch wasserfrei sein. Bevorzugt sind die natürlich vorkommenden Mineralien wie Dolomit und Huntit.
Besonders bevorzugt ist eine wasserfreie Form, in der x = 3 und y = 1 gilt, Mg₃Ca(CO₃)₄ (Huntit).

Die basischen Magnesiumcarbonate b₂) können ebenfalls sowohl in wasserhaltiger als auch wasserfreier Form eingesetzt werden. Auch hier sind die natürlich vorkommenden Mineralien wie Hydromagnesit, eine wasserhaltige Verbindung mit n = 5, v = 4 und w = 4, Mg₅(CO₃)₄(OH)₂ · 4 H₂O bevorzugt.

Besonders bevorzugt liegt das Verhältnis von b₁):b₂) im Bereich von 1:1 bis 2:1.

Neben den Komponenten A) und B) können die erfindungsgemäßen Formmassen noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Weiterhin können die erfindungsgemäßen thermoplastischen Formmassen 0 bis 40 Gew.-% faser- oder teilchengröße Füllstoffe oder deren Mischungen enthalten, die natürlich von der Komponente B) verschieden sind. In der Regel sind dies übliche Zusatzstoffe und Verarbeitungshilfsmittel wie Stabilisatoren, Oxidationsverzögerer, Mittel gegen Wärmezersetzung, Färbemittel wie Farbstoffe und Pigmente, faser- und pulverförmige Füll- und Verstärkungsmittel, Keimbildungsmittel, Weichmacher usw.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Iodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 40 Gew.-%, bevorzugt bis zu 30 Gew.-%, insbesondere bis zu 25 Gew.-%.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur besseren Verträglichkeit mit dem thermoplastischen Polyester sind Minerale und Füllstoffe gegebenenfalls mit einem Haftvermittler ausgerüstet. Bevorzugt sind Glycidyl-, Vinyl- und Aminoalkyltrialkoxysilane.

Weiterhin können die erfindungsgemäßen thermoplastischen Formmassen 0 bis 40 Gew.-% eines schlagzäh modifizierenden Polymeren (im folgenden auch als kautschukelastisches Polymerisat oder Elastomer bezeichnet) enthalten.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

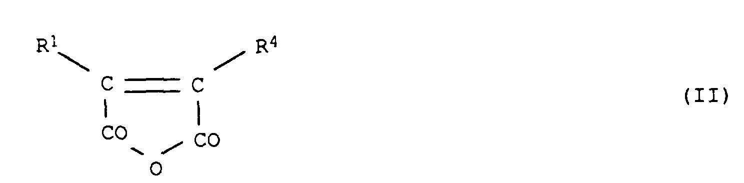

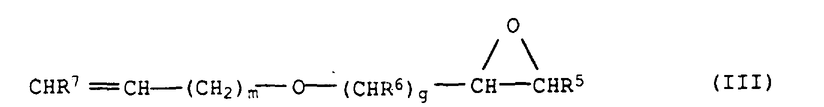

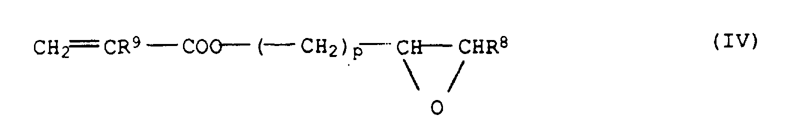

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidylmethacrylat, (Meth)acrylsäure und/oder Maleinsäureanhydrid, und
- 1 bis 45,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 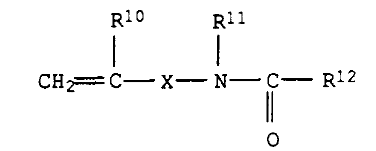 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 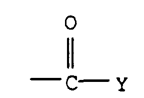
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisier-baren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| | | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise können die Komponente B) sowie gegebenenfalls übliche Zusatzstoffe mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Flammfestigkeit bei gleichzeitig sehr guten mechanischen und elektrischen Eigenschaften aus. Sie eignen sich zur Herstellung von Fasern, Folien und Formkörpern.

### Beispiele

### Herstellung der Copolyester

### Komponente A/1

In einem Reaktionsgefäß wurden 63 kg Dimethylterephthalat, 48,7 kg 1,4-Butandiol, 7,0 kg des Dimethylesters einer C-36-Dimersäure (Priplast® 3008 der Firma Emery Ind. Inc.), 8 kg Toluol als Schleppmittel sowie 9,06 g Tetrabutylortho-titanat (TBOT) 2 h auf 190°C erhitzt, wobei das entstehende Methanol fortlaufend abdestilliert wurde.

Das Umesterungsprodukt wurde in einer kontinuierlichen Vorkondensationszone unter kontinuierlichem Zusatz von insgesamt 59 g TBOT bei einer Temperatur von 90°C, einem Druck von 400 bis 1067 Pa (3 bis 8 Torr) und einer Verweilzeit von 5 min kondensiert.

In einem Abscheider wurde das Vorkondensat bei 250°C und einem Druck von 400 bis 667 Pa (3 bis 5 Torr) von dampfförmigem Butandiol abgetrennt, in Form von Strängen ausgetragen, im Wasserbad verfestigt und granuliert. Die Viskositätszahl VZ des Copolyesterpräpolymeren betrug 35 ml/g (gemessen an einer 0,5 gew.-%igen Lösung in Phenol/o-Dichlorbenzol (Gewichtsverhältnis 1:1) bei 25°C.

Das erhaltene Granulat wurde in einer Festphasennachkondensation (Taumlermischer) unter Stickstoff bei 210°C 36 h auf eine VZ von 140 ml/g getempert. Der Copolyester auf Basis von Polybutylenterephthalat enthielt 8,5 Gew.-% einer C-36-Dimersäure als Cokomponente (10 Gew.-% Dimethylester einer C-36-Dimersäure bezogen auf die Summe des Dimethylesters der C-36-Dimersäure und des Dimethylterephthalats).

### Komponente A/2

In einem Reaktionsgefäß wurden 59,5 kg Dimethylterephthalat, 48,7 kg 1,4-Butandiol, 10,5 kg des Dimethylesters einer C-36-Dimersäure (Priplast®3008 der Firma Emery Ind. Inc.), 8 kg Toluol als Schleppmittel sowie 9,06 g Tetrabutylortho-titanat (TBOT) 2 h auf 190°C erhitzt, wobei das entstehende Methanol fortlaufend abdestilliert wurde.

Das Umesterungsprodukt wurde in einer kontinuierlichen Vorkondensationszone unter kontinuierlichem Zusatz von insgesamt 59 g TBOT bei einer Temperatur von 290°C, einem Druck von 400 bis 1067 Pa (3 bis 8 Torr) und einer Verweilzeit von 5 min kondensiert.

In einem Abscheider wurde das Vorkondensat bei 250°C und einem Druck von 400 bis 667 Pa (3 bis 5 Torr) von dampfförmigem Butandiol abgetrennt, in Form von Strängen ausgetragen, im Waserbad verfestigt und granuliert.

Das erhaltene Granulat wurde in einer Festphasenkondensation (Taumlermischer) unter Stickstoff bei 210°C 36 h auf eine VZ von 140 ml/g getempert. Der Copolyester auf Basis von Polybutylenterephthalat enthielt 12,7 Gew.-% der C-36-Dimersäure als Cokomponente (15 Gew.-% Dimethylester der C-36-Dimersäure bezogen auf die Summe des Dimethylesters der C-36-Dimersäure und des Dimethylterephthalates).

### Komponente A/V (zum Vergleich)

### Polybutylenterephthalat (Ultradur®B4500 der BASF AG): VZ = 135 ml/g

### Herstellung der Formmassen

Die Komponenten A/1 bzw. A/2 bzw. A/V wurden mit einer Mischung aus Mg₃Ca(CO₃)₄ (Huntit) und Mg₅(CO₃)₄(CH)₂.4 H₂O (Hydromagnesit) (Gew.-Verhältnis Huntit:Hydromagnesit = 2:1) (Komponente B)) und Schnittglasfasern (Komponente C) auf einem Zweiwellenextruder (ZSK 53 der Firma Werner & Pfleiderer) bei 260°C gemischt (30 kg/h Durchsatz, 140 U/min), extrudiert, gekühlt, granuliert, getrocknet (80°C, Vakuum, 8 Stunden) und anschließend bei 260°C zu Probekörpern verspritzt.

Der Brandtest erfolgte nach UL 94 an 1/16 Zoll-Prüfkörpern nach üblicher Konditionierung, die Schlagzähigkeit wurde nach DIN 53 453, die Reißdehnung nach DIN 53 455 bestimmt.

**Tabelle**

| Beispiel | Zusammensetzung (Gew.-%) | | | Reißdehnung | Schlagzähigkeit (kJ/m²) | UL 94 (1/16") |
|---|---|---|---|---|---|---|
| 1 | 45 A/1 | 45 B | 10 C | 1.5 | 17 | V-0 |
| 2 | 45 A/2 | 45 B | 10 C | 1.6 | 20 | V-0 |
| 3 | 50 A/2 | 40 B | 10 C | 2.0 | 24 | V-0 |
| V1 | 45 A/V | 45 B | 10 C | 0.7 | 10 | V-0 |
| V2 | 50 A/V | 40 B | 10 C | 0.8 | 14 | V-2 |
| V3 | 70 A/V | - | 30 C | 2.5 | 30 | V- |
| V4 | 70 A/2 | - | 30 C | 4.0 | 38 | V- |

In Vergleich zu PBT (V2) wird mit dem Copolyester weniger Flammschutzmittel für die VO-Einstufung benötigt (Beispiel 3).

Im Kompound gemäß Anspruch werden im Vergleich zu PBT Reißdehnung und Schlagzähigkeit stärker angehoben,

| | | | | |
|---|---|---|---|---|
| Beispiel 2 | Reißdehnung | = 1.6 | Schlagzähigkeit | = 20 |
| Beispiel V1 | " | = 0.7 | " | = 10 |
| | | ≙ 128% | " | ≙ 100% |

als bei reiner Glasfaserverstärkung zu erwarten war

| | | | | |
|---|---|---|---|---|
| Beispiel V4 | Reißdehnung | = 4.0 | Schlagzähigkeit | = 38 |
| Beispiel V3 | " | = 2.5 | " | = 30 |
| | | ≙ 60% | | ≙ 26%. |

## Patentansprüche

1. Thermoplastische Formmassen, enthaltend als wesentliche Komponenten
A) 10 - 80 Gew.-% eines Copolyesters auf der Basis von Polyalkylenterephthalaten, welcher als Cokomponente 5 bis 25 Gew.-%, bezogen auf A) eine Dimersäure mit 7 bis 52 C-Atomen enthält
B) 20 - 70 Gew.-% einer Mischung aus
b₁) einem Magnesium-Calcium-Carbonat der allgemeinen Formel MgₓCa_{y}(CO₃)_{x+y} · m H₂O,
wobei x und y Zahlen von 1 bis 5 bedeuten
und x/y ≥ 1 gilt
und m ≥ 0
und
b₂) einem basischen Magnesium-Carbonat der allgemeinen Formel Mgₙ(CO₃)ᵥ(OH)₂ₙ₋₂ᵥ · w H₂O, wobei
n eine Zahl von 1 bis 6 bedeutet,
v eine Zahl größer als 0 und kleiner als 6
und n/v > 1 gilt
und w ≥ 0,
wobei das Mengenverhältnis von b₁):b₂) im Bereich von 1:1 bis 3:1 liegt.

2. Thermoplastische Formmassen nach Anspruch 1, in denen die Komponente A) ein Copolyester auf der Basis von Polyethylenterephthalat oder Polybutylenterephthalat ist.

3. Thermoplastische Formmassen nach den Ansprüchen 1 und 2, in denen der Copolyester A) 5 bis 15 Gew.-%, bezogen auf A), einer Dimersäure als Cokomponente enthält.

4. Thermoplastische Formmassen nach den Ansprüchen 1 bis 3, in denen die Cokomponente des Copolyesters A) eine Dimersäure mit 36 bis 44 C-Atomen ist.

5. Verwendung der thermoplastischen Formmassen gemäß den Ansprüchen 1 bis 4 zur Herstellung von Fasern, Folien und Formkörpern.

6. Formkörper, erhältlich aus den thermoplastischen Formmassen gemäß den Ansprüchen 1 bis 4 als wesentliche Komponente.

## Claims

1. A thermoplastic molding material containing, as essential components,
A) 10 - 80% by wt. of a copolyester based on polyalkylene terephthalates, which contains from 5 to 25% by weight, based on A), of a dimeric acid of 7 to 52 carbon atoms as a co-component, and
B) 20 - 70% by wt. of a mixture of
b₁) a magnesium calcium carbonate of the formula MgₓCa_{y}(CO₃)_{x+y} · m H₂O,
where x and y are each from 1 to 5,
x/y ≥ 1
and m ≥ 0,
and
b₂) a basic magnesium carbonate of the formula Mgₙ(CO₃)ᵥ(OH)₂ₙ₋₂ᵥ · w H₂O, where
n is from 1 to 6,
v is greater than 0 and less than 6,
n/v > 1
and w ≥ 0,
the ratio of b₁):b₂) being from 1:1 to 3:1.

2. A thermoplastic molding material as claimed in claim 1, in which component A) is a copolyester based on polyethylene terephthalate or polybutylene terephthalate.

3. A thermoplastic molding material as claimed in claim 1 or 2, in which the copolyester A) contains from 5 to 15% by weight, based on A), of a dimeric acid as a co-component.

4. A thermoplastic molding material as claimed in any of claims 1 to 3, in which the co-component of the copolyester A) is a dimeric acid of 36 to 44 carbon atoms.

5. The use of a thermoplastic molding material as claimed in any of claims 1 to 4 for the production of fibers, film and moldings.

6. A molding obtainable from a thermoplastic molding material as claimed in any of claims 1 to 4 as an essential component.

## Revendications

1. Masses à mouler thermoplastiques, qui contiennent à titre de composants essentiels
A) 10 à 80% en poids d'un copolyester à base de poly(téréphtalates d'alkylène), qui contient, à titre de cocomposant ou composant conjoint, 5 à 25% en poids, par rapport à A), d'un acide dimérique possédant de 7 à 52 atomes de carbone,
B) 20 à 70% en poids d'un mélange constitué de
b₁) un carbonate de magnésium-calcium de la formule générale
MgₓCA_{y}(CO₃)_{x+y} · m H₂O
où x et y représentent des nombres dont la valeur varie de 1 à 5
et x/y ≥ 1
et m ≥ 0
et
b₂) un carbonate de magnésium basique de la formule générale
Mgₙ(CO₃)ᵥ(OH)₂ₙ₋₂ᵥ ·w H₂O
où n représente un nombre dont la valeur varie de 1 à 6,
v représente un nombre supérieur à 0 et plus petit que 6
et n/v > 1
et w ≥ 0
où le rapport de mélange de b₁):b₂) varie dans la plage de 1:1 à 3:1.

2. Masses à mouler thermoplastiques suivant la revendication 1, dans lesquelles le composant A) est un copolyester à base de poly(téréphtalate d'éthylène) ou de poly(téréphtalate de butylène).

3. Masses à mouler thermoplastiques suivant les revendications 1 et 2, dans lesquelles le copolyester A) contient de 5 à 15% en poids, par rapport à A), d'un acide dimérique à titre de cocomposant ou composant conjoint.

4. Masses à mouler thermoplastiques suivant les revendications 1 à 3, dans lesquelles le cocomposant ou composant conjoint du copolyester A) est un acide dimérique qui comporte de 36 à 44 atomes de carbone.

5. Utilisation des masses à mouler thermoplastiques suivant les revendications 1 à 4 pour la fabrication de fibres, de feuilles et d'articles moulés.

6. Articles moulés, que l'on peut obtenir à partir des masses à mouler thermoplastiques suivant l'une quelconque des revendications 1 à 4 à titre de composants essentiels.
